# EUROPÄISCHE PATENTSCHRIFT

(11) **EP 3 525 975 B1**
(45) Veröffentlichungstag und Bekanntmachung des Hinweises auf die Patenterteilung: **16.08.2023**
(21) Anmeldenummer: 17787903.8
(22) Anmeldetag: 10.10.2017
(51) Int. Cl.: B23K 26/03, B23K 26/046, B23K 26/38

(54) **VERFAHREN UND VORRICHTUNG ZUR BESTIMMUNG UND ZUR REGELUNG EINER FOKUSPOSITION EINES BEARBEITUNGSSTRAHLS**
METHOD AND DEVICE FOR DETERMINING AND REGULATING A FOCAL POSITION OF A MACHINING BEAM
PROCÉDÉ ET DISPOSITIF POUR LA DÉTERMINATION ET LA RÉGULATION D'UNE POSITION FOCALE D'UN FAISCEAU D'USINAGE

(30) Priorität: 13.10.2016 DE 102016219928
(43) Veröffentlichungstag der Anmeldung: 21.08.2019
(73) Patentinhaber: TRUMPF Werkzeugmaschinen SE + Co. KG, 71254 Ditzingen (DE)
(72) Erfinder: MAGG, Winfried, 71254 Ditzingen (DE); SCHINDHELM, David, 70499 Stuttgart (DE); REGAARD, Boris, 70499 Stuttgart (DE)
(74) Vertreter: Trumpf Patentabteilung
(86) Internationale Anmeldenummer: PCT/EP2017/075795
(87) Internationale Veröffentlichungsnummer: WO 2018/069308

(56) Entgegenhaltungen:
- WO-A1-2004/050290
- DE-A1-102010 020 183
- JP-A- H10 258 382
- JP-A- S62 183 990
- DATABASE WPI Week 2014 27. August 2014 (2014-08-27) Thomson Scientific, London, GB; AN 2014-V06983 XP002777992, "Method for acquiring laser focal point through laser gear", -& CN 104 002 039 A (HANS LASER TECHNOLOGY CO LTD) 27. August 2014 (2014-08-27)

## Beschreibung

Die vorliegende Erfindung betrifft ein Verfahren zur Bestimmung sowie ein Verfahren zur Regelung einer Fokusposition eines Bearbeitungsstrahls, insbesondere eines Laserstrahls, relativ zu einem Werkstück beim schneidenden Bearbeiten des Werkstücks mit dem Bearbeitungsstrahl, siehe z.B. WO 2004/050290 A1.

Die Erfindung betrifft auch eine zugehörige Vorrichtung zum schneidenden Bearbeiten eines Werkstücks mittels eines Bearbeitungsstrahls, insbesondere mittels eines Laserstrahls.

Für einen robusten Schneidprozess ist die Fokuslage bzw. die Fokusposition in Strahlausbreitungsrichtung (d.h. in Richtung der Strahlachse) des (fokussierten) Bearbeitungsstrahls, beispielsweise eines Laserstrahls, eine wesentliche Prozesskenngröße. An der Fokusposition befindet sich die Strahltaille, d.h. die minimale Ausdehnung bzw. der minimale Durchmesser des (fokussierten) Bearbeitungsstrahls senkrecht zur Strahlachse. Der Bearbeitungsstrahl wird bei den vorliegenden Anwendungen typischerweise senkrecht zu einem beispielsweise plattenartigen Werkstück (in Z-Richtung) eingestrahlt, d.h. seine Strahlachse ist senkrecht zur Oberfläche des Werkstücks (in der XY-Ebene) ausgerichtet. Die Fokusposition wird durch Störgrößen beeinflusst und kann nur schwer direkt gemessen werden. Typischerweise wird daher die Fokusposition durch die Regelung von Einflussparametern (z.B. Fokuslage und Schneidabstand) konstant gehalten. Aus der DE 10 2014 000 330 B3 ist ein Verfahren zur Überwachung und Regelung der Fokuslage eines Bearbeitungslaserstrahls beim Laserschneiden bekannt geworden. Bei dem Verfahren werden während der Laserbearbeitung mit mindestens einer bildgebenden Kamera eine durch die Laserbearbeitung hervorgerufene Prozessemission sowie eine im Werkstück voranschreitende Schneidfront in einem oder in mehreren Bildern ortsaufgelöst erfasst. Die momentane Fokuslage des Bearbeitungslaserstrahls relativ zur Oberfläche des Werkstücks wird dann jeweils aus einer momentanen Ausdehnung der Prozessemission und einem momentanen Abstand eines Ortes maximaler Prozessemission zum obersten Schneidfrontscheitelpunkt in dem einen oder den mehreren Bildern ermittelt.

In der EP 1 750 891 B1 ist ein Verfahren zur Bestimmung der für einen Werkstückbearbeitungsprozess geeigneten Fokuslage eines Laserstrahls einer Laseranlage beschrieben, bei dem zumindest zwei unterschiedliche Fokuslagen eingestellt werden. Bei dem Verfahren wird für unterschiedliche Fokuslagen des Laserstrahls bestimmt, ob und/oder unter welchen Umständen zumindest der Randbereich des Laserstrahls in Kontakt mit einem Werkstück kommt.

In der WO 2004/050290 A1 ist ein Verfahren zum Bestimmen einer Fokusposition relativ zu einem Werkstück beschrieben, bei dem mit einem Laserstrahl einer Mehrzahl von linienförmigen Mustern auf der Oberfläche eines Mustersubstrats erzeugt wird, wobei der Abstand zwischen dem Laser und der Substratoberfläche schrittweise verändert wird. Danach wird die Breite der einzelnen Linien gemessen und die Linie mit der geringsten Breite wird ermittelt. Die der geringsten Linienbreite zugehörige Höheneinstellung wird als Fokuseinstellung ausgewertet und gespeichert.

### Aufgabe der Erfindung

Der Erfindung liegt die Aufgabe zugrunde, ein Verfahren und eine Vorrichtung bereitzustellen, welche eine Bestimmung sowie ggf. eine Regelung der Fokusposition eines Bearbeitungsstrahls während des schneidenden Bearbeitens eines Werkstücks ermöglichen.

### Gegenstand der Erfindung

Diese Aufgabe wird erfindungsgemäß durch ein Verfahren der eingangs genannten Art gelöst, welches folgende Schritte umfasst: Aufnehmen mindestens eines ortsaufgelösten Bildes eines zu überwachenden Bereichs des Werkstücks, der die Schnittkanten eines während des schneidenden Bearbeitens gebildeten Schnittspalts an der Oberseite des Werkstücks umfasst, Ermitteln einer Spaltbreite des Schnittspalts an der Oberseite des Werkstücks anhand der Schnittkanten in dem mindestens einen ortsaufgelösten Bild, sowie Bestimmen der Fokusposition des Bearbeitungsstrahls relativ zum Werkstück anhand der ermittelten Spaltbreite und anhand einer Strahlkaustik des Bearbeitungsstrahls.

Insbesondere (nicht notwendigerweise ausschließlich) bei Schmelzschneidprozessen wird die Schnittspaltbreite an der Oberseite des Werkstücks im Wesentlichen durch die Breite des Bearbeitungsstrahls, beispielsweise eines Plasmastrahls oder eines Laserstrahls, d.h. durch die Strahlkaustik und die Position der Strahltaille (Fokusposition in Z-Richtung) bestimmt bzw. beeinflusst. Bei Kenntnis der Strahlkaustik des Bearbeitungsstrahls, d.h. der Veränderung des Durchmessers des fokussierten Bearbeitungsstrahls senkrecht zur Strahlachse bei einem Sollzustand, d.h. bei einer (nominellen) Fokuslage, bei der ein gutes Schneidergebnis erzielt wird, kann durch Ermittlung der Breite des Schnittspalts an der Oberseite des Werkstücks auf die Fokusposition in Z-Richtung bzw. auf die Strahltaillenlage geschlossen werden. Hierbei kann ausgenutzt werden, dass bei vergleichsweise kleinen Vorschubgeschwindigkeiten beim schneidenden Bearbeiten der Verlauf des Schnittspalts in Dickenrichtung praktisch der Strahlkaustik des Bearbeitungsstrahls entspricht. Bei größeren Vorschubgeschwindigkeiten kann es zu kleinen Abweichungen zwischen dem Verlauf des Schnittspalts in Dickenrichtung und der Strahlkaustik des Bearbeitungsstrahls kommen, wobei typischerweise die Spaltbreite des Schnittspalts an der Oberseite des Werkstücks geringfügig abnimmt und die Spaltbreite des Schnittspalts an der Unterseite des Werkstücks geringfügig zunimmt. Obwohl dieser Effekt relativ klein ist, kann dieser Effekt beim Bestimmen der Fokusposition berücksichtigt werden, indem eine Korrektur der Fokusposition in Abhängigkeit von der Vorschubgeschwindigkeit (nur bei großen Vorschubgeschwindigkeiten) durchgeführt wird.

Bei der Bestimmung der Fokusposition kann ausgenutzt werden, dass die Strahlkaustik des Bearbeitungsstrahls bis zur Fokusposition monoton abnimmt und danach monoton ansteigt. Ist beispielsweise bekannt, dass die Fokusposition bzw. die Strahltaille sich unterhalb der Oberfläche des Werkstücks befindet, existiert ein eindeutiger Zusammenhang zwischen der Spaltbreite an der Oberseite des Werkstücks und der Z-Position entlang der Strahlkaustik, anhand dessen die Fokusposition bestimmt werden kann. Ebenfalls kann bei bekannter Strahltaillenlage bzw. Fokusposition in Z-Richtung auf die Strahlkaustik (bzw. die numerische Apertur des Laserstrahls) rückgeschlossen werden; diese Messgröße ist jedoch in der Praxis in der Regel von untergeordneter Bedeutung.

Das hier beschriebene Verfahren ermöglicht es, während der schneidenden Bearbeitung, d.h. on-line bzw. hauptzeitparallel, die korrekte Fokusposition bzw. die korrekte Lage der Strahltaille relativ zu dem Werkstück zu bestimmen bzw. zu überprüfen sowie erforderlichenfalls zu regeln (s.u.). Wie allgemein üblich, wird während der schneidenden Bearbeitung ein Schnittspalt in dem Werkstück gebildet, der entlang einer Bahnkurve mit vorgegebener Geometrie verläuft. Der Schnittspalt dient typischerweise zur Trennung von Werkstückteilen vom (Rest-)Werkstück. Eine off-line Ermittlung der Fokuslage z.B. durch Schnitte / Einschüsse in Referenzbleche, d.h. in der Nebenzeit, wie sie beispielsweise in der DE 102 55 628 A1 beschrieben ist, zur Bestimmung der Fokuslage ist daher typischerweise nicht mehr erforderlich. Der zu überwachende Bereich an der Oberseite (dem Bearbeitungskopf zugewandten Seite) des Werkstücks kann die Schneidfront bzw. den Schneidfrontscheitelpunkt enthalten, hinter der sich der Schnittspalt erstreckt, dies ist aber für die Bestimmung der Fokusposition nicht zwingend erforderlich. Bei dem Bearbeitungsstrahl kann es sich um einen Laserstrahl oder um eine andere Art von Hochenergiestrahl handeln, beispielsweise um einen Plasmastrahl. In der nachfolgenden Beschreibung wird in der Regel von einem Laserstrahl gesprochen, es versteht sich aber, dass es sich bei dem Bearbeitungsstrahl auch um eine andere Form von Hochenergiestrahl handeln kann.

Unter einem ortsaufgelösten Bild wird im Sinne dieser Anmeldung auch ein (eindimensionales) Bild verstanden, welches aus einer Pixelzeile mit 1 x N Pixeln besteht und welches z.B. von einer 1 x N Pixelkamera oder ggf. von einer Diodenzeile aufgenommen wird. Um in diesem Fall die Spaltbreite zu ermitteln, ist es erforderlich, dass die Pixelzeile unter einem Winkel zur Schneidrichtung bzw. zur Richtung des Schnittspalts ausgerichtet ist, da nur auf diese Weise die beiden Schnittkanten erfasst werden. Bevorzugt ist die Pixelzeile bzw. sind die N Pixel senkrecht zur Schneidrichtung ausgerichtet, um den Querschnitt über den Schnittspalt zu erfassen. Um sowohl die Schneidrichtung frei orientieren zu können als auch eine Erfassung der beiden Schnittkanten zu ermöglichen, ist die 1 x N Pixelzeile idealer Weise drehbar angeordnet. Es versteht sich, dass die Anzahl N der Pixel so groß ist, dass bei der Aufnahme des Bildes die beiden Schnittkanten des Schnittspalts erfasst werden können.

Bei einer Variante umfasst das Verfahren zusätzlich: Flächiges und/oder strukturiertes Beleuchten der Oberseite des Werkstücks durch Einstrahlen mindestens eines Beleuchtungsstrahls zumindest in den zu überwachenden Bereich an der Oberseite des Werkstücks. Zur Bestimmung der Spaltbreite des Schnittspalts an der Oberseite des Werkstücks kann eine flächige Beleuchtung und/oder eine strukturierte Beleuchtung eingesetzt werden. Unter einer strukturierten Beleuchtung wird eine Beleuchtung verstanden, bei welcher von einer Beleuchtungseinrichtung mindestens ein Beleuchtungsstrahl auf die Oberseite des Werkstücks eingestrahlt wird, welcher ein Muster auf der Oberseite des Werkstücks erzeugt. Um die Spaltbreite des Schnittspalts zu bestimmen, können Abweichungen und/oder Verzerrungen des Musters in dem aufgenommenen Bild erfasst und analysiert werden. Auf diese Weise können insbesondere Höheninformationen ermittelt werden, anhand derer die Schnittkanten des Schneidspalts bestimmt werden können. Eine strukturierte Beleuchtung, beispielsweise in Form einer linienförmigen Beleuchtung, ermöglicht eine Bestimmung der Spaltbreite des Schnittspalts auch für den Fall, dass Einfallradien an den Schnittkanten vorhanden sind. Bei einer flächigen Beleuchtung wird die Oberseite des Werkstücks beleuchtet, ohne dass anhand eines Musters, welches der Beleuchtungsstrahl auf der Oberfläche erzeugt, Rückschlüsse auf die Oberflächenbeschaffenheit getroffen werden.

Bei einer Weiterbildung wird der Beleuchtungsstrahl koaxial zum Bearbeitungsstrahl auf die Oberseite bzw. auf die dem Bearbeitungsstrahl zugewandte Oberfläche des Werkstücks eingestrahlt. Diese Weiterbildung eignet sich insbesondere für eine flächige Beleuchtung der Oberseite des Werkstücks. Die Bestimmung der Spaltbreite eines Schneidspalts, bei der die Schnittkanten des Schneidspalts als Materialbegrenzungen eines flächig beleuchteten Werkstücks bestimmt werden, ist aus der DE 10 2011 003 717 A1 bekannt. Die Schnittkanten können hierbei durch Kantenfindung in einem Grauwert-Bild des zu überwachenden Bereichs des Werkstücks detektiert werden.

Bei einer weiteren Weiterbildung umfasst das strukturierte Beleuchten das Einstrahlen mindestens eines linienförmigen Beleuchtungsstrahls auf die Oberseite des Werkstücks, wobei der linienförmige Beleuchtungsstrahl typischerweise quer zum Schnittspalt verläuft. Die Projektion eines Musters in Form einer Linie auf die Oberseite des Werkstücks stellt die einfachste Form einer strukturierten Beleuchtung dar. Die Schnittkanten werden in diesem Fall anhand der Enden der auf die Oberseite des Werkstücks projizierten Linie bzw. anhand von Knicken in der auf die Oberseite des Werkstücks projizierten Linie ermittelt (Lichtschnittverfahren).

Bei einer Variante umfasst das Verfahren zusätzlich: Ermitteln einer minimalen Spaltbreite des Schnittspalts in Dickenrichtung des Werkstücks, sowie Bestimmen der Fokusposition des Bearbeitungsstrahls relativ zum Werkstück anhand der Spaltbreite an der Oberseite des Werkstücks und anhand der minimalen Spaltbreite. Die Bestimmung der Fokusposition anhand der Spaltbreite an der Oberseite des Werkstücks ist grundsätzlich ausreichend zur Bestimmung der Fokusposition, kann jedoch durch die zusätzliche Bestimmung der minimalen Spaltbreite robuster und unabhängiger von den Laserstrahlparametern gemacht werden. Hierbei wird ausgenutzt, dass die schmalste Schnittspaltbreite durch den Durchmesser der Strahltaille, d.h. den Durchmesser des Laserstrahls an der Fokusposition, bestimmt bzw. beeinflusst wird. Sowohl die Schnittspaltbreite an der Oberseite des Werkstücks als auch die minimale Schnittspaltbreite werden durch die Kaustik des Laserstrahls bestimmt bzw. beeinflusst, so dass auf die oben beschriebene Weise zwei Stützstellen der Strahlkaustik in Z-Richtung ermittelt werden können. Ist die Strahlkaustik des Laserstrahls, d.h. der Durchmesser des Laserstrahls quer zur Strahlachse bzw. zur Strahlausbreitungsrichtung beispielsweise aufgrund von vorhergehenden Experimenten an einer Mehrzahl von Positionen in Strahlausbreitungsrichtung bekannt, kann die Messgenauigkeit bei der Bestimmung der Fokusposition des Laserstrahls in Z-Richtung deutlich verbessert werden und/oder es kann ein weiterer Parameter der Strahlkaustik bestimmt werden.

Bei einer Variante wird die minimale Spaltbreite des Schnittspalts anhand von Prozessemissionen bzw. vom Prozesseigenleuchten in dem zu überwachenden Bereich bestimmt. Bei den Prozessemissionen kann es sich um Temperaturstrahlung oder Linienstrahlung von der Schnittfront, dem Schmelzfaden oder Metalldampf innerhalb und unterhalb des Schnittspaltes handeln. Die in dem aufgenommenen Bild beobachtete Breite der Prozessemissionen wird durch den Schnittspalt, genauer gesagt durch dessen minimale Schnittspaltbreite, begrenzt. Unter Linienstrahlung wird Strahlung bei typischer Weise diskreten Emissions-Wellenlängen verstanden, die charakteristisch für ein jeweiliges chemisches Element des Werkstückmaterials ist. Auch von einer Fläche unterhalb des Schnittspaltes reflektierte Laserstrahlung oder eine untenliegende Beleuchtung, z.B. durch aufgeheizte Auflagestege, ist geeignet, die schmalste Schnittspaltbreite messbar zu machen. Auch die reflektierte Laserstrahlung bzw. die Beleuchtung durch aufgeheizte Auflagestege werden im Sinne dieser Anmeldung als Prozessemissionen angesehen. Alternativ zu Prozessemissionen kann die minimale Schnittspaltbreite z.B. auch durch eine eigens für diesen Zweck vorgesehene Beleuchtungseinrichtung messbar gemacht werden, welche das Werkstück zumindest im Bereich des Schnittspalts von der Unterseite beleuchtet.

Bei einer Weiterbildung wird mindestens ein Bild des zu überwachenden Bereichs bei Wellenlängen im infraroten Wellenlängenbereich aufgenommen. Unter dem infraroten Wellenlängenbereich werden im Sinne dieser Anmeldung Wellenlängen zwischen ca. 750 nm und ca. 1600 nm verstanden, insbesondere Wellenlängen zwischen ca. 750 nm und ca. 1100 nm. Insbesondere die weiter oben beschriebenen Prozessemissionen und somit die minimale Schnittspaltbreite lassen sich in diesem Wellenlängenbereich gut erkennen. Auch die Spaltbreite des Schnittspalts an der Oberseite des Werkstücks kann im infraroten Wellenlängenbereich ermittelt werden.

Alternativ oder zusätzlich zur Aufnahme eines Bildes bei Wellenlängen im infraroten Wellenlängenbereich kann auch eine Aufnahme mindestens eines Bildes im sichtbaren Wellenlängenbereich, d.h. bei Wellenlängen zwischen ca. 380 nm und ca. 750 nm, oder im UV-Wellenlängenbereich, d.h. bei Wellenlängen von weniger als ca. 380 nm, erfolgen. Insbesondere beim Ermitteln der Spaltbreite an der Oberseite des Werkstücks mit Hilfe eines Lichtschnitts kann es günstig sein, die Schnittkanten an der Oberseite des Werkstücks in einem ortsaufgelösten Bild im sichtbaren Wellenlängenbereich zu bestimmen. Die Aufnahme des bzw. der Bilder erfolgt bevorzugt mit Hilfe einer ortsauflösenden Kamera, die in dem entsprechenden Wellenlängenbereich sensitiv ist. Gegebenenfalls können Wellenlängenfilter verwendet werden, um einen geeigneten Wellenlängenbereich aus dem Spektrum der auf die Kamera auftreffenden Strahlung zu selektieren.

Bevorzugt wird das mindestens eine Bild des zu überwachenden Bereichs koaxial zu einer Strahlachse des Bearbeitungsstrahls aufgenommen. Da der Bearbeitungsstrahl typischerweise senkrecht auf die in der Regel plane Oberfläche des Werkstücks trifft, kann durch die koaxiale Beobachtung des zu überwachenden Bereichs eine richtungsunabhängige Beobachtung realisiert werden. Dies hat sich für die Ermittlung der Spaltbreite an der Oberseite des Werkstücks sowie für die Ermittlung der minimalen Spaltbreite des Schnittspalts als günstig erwiesen.

Bei einer weiteren Variante erfolgen das Ermitteln der Spaltbreite an der Oberseite des Werkstücks und das Ermitteln der minimalen Spaltbreite an ein- und demselben aufgenommenen Bild. Bei der Aufnahme eines Bildes mit Hilfe einer koaxialen Kamera und einer flächigen Beleuchtung des zu überwachenden Bereichs ist der Unterschied zwischen den beiden Spaltbreiten typischerweise als "schwarzer Rand" in dem aufgenommenen Bild sichtbar, der sich an beiden Seiten entlang des Schnittspalts erstreckt. Dieser "schwarze Rand" ist mit einer geeigneten Bildverarbeitung robust auswertbar, so dass sich sowohl die Spaltbreite an der Oberseite als auch die minimale Spaltbreite ermitteln lassen.

Bei einer alternativen Variante erfolgen das Ermitteln der Spaltbreite an der Oberseite des Werkstücks und das Ermitteln der minimalen Spaltbreite an mindestens zwei Bildern, wobei beim Aufnehmen des zweiten Bildes mindestens ein Beleuchtungsstrahl auf die Oberseite des Werkstücks eingestrahlt wird und wobei beim Aufnehmen des ersten Bildes kein Beleuchtungsstrahl auf die Oberseite des Werkstücks eingestrahlt wird, und wobei bevorzugt das erste Bild vom zweiten Bild pixelweise subtrahiert wird. Bei dieser Variante können die Spaltbreite an der Oberseite des Werkstücks bzw. die minimale Spaltbreite in wechselnd beleuchteten und unbeleuchteten Bildern getrennt ermittelt werden. In diesem Fall ist es hilfreich, das "unbeleuchtete" von dem "beleuchteten" Bild pixelweise zu subtrahieren, sodass der Schnittspalt komplett dunkel erscheint, da auf diese Weise die Prozessemissionen aus dem beleuchteten Bild entfernt werden. Auch in diesem Fall können einfache Algorithmen zur Kantenfindung angewendet werden, um die jeweiligen Schnittspaltbreiten zu bestimmen.

Besonders bevorzugt erfolgen das Ermitteln der Spaltbreite an der Oberseite des Werkstücks und das Ermitteln der minimalen Spaltbreite an mindestens drei Bildern, wobei beim Aufnehmen des dritten Bildes kein Beleuchtungsstrahl auf die Oberseite des Werkstücks eingestrahlt wird. In diesem Fall ist es hilfreich, die "unbeleuchteten" ersten und dritten Bilder von dem "beleuchteten" zweiten Bild pixelweise zu subtrahieren. Bevorzugt wird zu diesem Zweck der Mittelwert der "unbeleuchteten" Bilder von dem "beleuchteten" Bild pixelweise subtrahiert oder die beiden "unbeleuchteten" Bilder werden vom Doppelten des "beleuchteten" Bildes pixelweise subtrahiert.

Ein weiterer Aspekt der Erfindung betrifft ein Verfahren zum Regeln einer Fokusposition eines Bearbeitungsstrahls relativ zu einem Werkstück beim schneidenden Bearbeiten des Werkstücks mit dem Bearbeitungsstrahl, umfassend: Durchführen des weiter oben beschriebenen Verfahrens zum Bestimmen einer Fokusposition des Bearbeitungsstrahls relativ zum Werkstück, sowie Verändern der Fokusposition des Bearbeitungsstrahls relativ zum Werkstück, bis die Fokusposition mit einer Soll-Fokusposition übereinstimmt. Die Soll-Fokusposition kann beispielsweise um einen vorgegebenen Wert bezüglich einer Referenz-Fokusposition versetzt sein, die beispielsweise an der Oberseite des Werkstücks gebildet ist. Befindet sich die Strahltaille auf der Oberfläche bzw. der Oberseite des Werkstücks, sind die beiden in dem bzw. in den Bildern ermittelten Spaltbreiten annähernd gleich groß. Diese Fokusposition kann daher als Referenz-Fokusposition verwendet werden, von der aus eine gewünschte Soll-Fokuslage eingestellt wird. Die Referenz-Fokusposition stellt damit eine Alternative zur off-line Ermittlung der Fokuslage z.B. durch Schnitte / Einschüsse in Referenzbleche dar, wie sie beispielsweise in der DE 102 55 628 A1 beschrieben ist. Insbesondere kann diese Referenz-Fokusposition leicht für unterschiedliche Laserleistungen und Zoomeinstellungen ermittelt werden. Ein weiterer Aspekt der Erfindung betrifft eine Vorrichtung zum schneidenden Bearbeiten eines Werkstücks mittels eines Bearbeitungsstrahls, insbesondere mittels eines Laserstrahls, umfassend: eine Bilderfassungseinrichtung zur Aufnahme mindestens eines ortsaufgelösten Bildes eines zu überwachenden Bereichs an der Oberseite des Werkstücks, der die Schnittkanten während des schneidenden Bearbeitens gebildeten Schnittspalts an der Oberseite des Werkstücks umfasst, sowie eine Auswerteeinrichtung, welche ausgebildet bzw. programmiert ist, anhand der Schnittkanten in dem mindestens einen Bild eine Spaltbreite des Schnittspalts an der Oberseite des Werkstücks zu ermitteln, sowie anhand der ermittelten Spaltbreite und anhand einer Strahlkaustik des Bearbeitungsstrahls eine Fokusposition des Bearbeitungsstrahls relativ zum Werkstück zu bestimmen.

Die Vorrichtung kann beispielsweise als Bearbeitungskopf, insbesondere als Laserbearbeitungskopf, ausgebildet sein. In diesem Fall ist die Auswerteeinrichtung typischerweise in den Bearbeitungskopf integriert. Bei der Vorrichtung kann es sich auch um eine Bearbeitungsmaschine, insbesondere um eine Laserbearbeitungsmaschine bzw. um eine Laserschneidmaschine handeln. In diesem Fall befindet sich die Auswerteeinrichtung typischerweise an einem vom Bearbeitungskopf räumlich getrennten Ort.

Bei einer Ausführungsform umfasst die Vorrichtung zusätzlich mindestens eine Beleuchtungseinrichtung zur flächigen und/oder strukturierten Beleuchtung der Oberseite des Werkstücks durch das Einstrahlen mindestens eines Beleuchtungsstrahls zumindest in den zu überwachenden Bereich. Die Beleuchtungseinrichtung kann ausgebildet sein, den Beleuchtungsstrahl koaxial zur Strahlachse des Bearbeitungsstrahls auf die Oberseite des Werkstücks einzustrahlen, dies ist aber nicht zwingend erforderlich. Insbesondere beim so genannten Lichtschnittverfahren wird ein linienförmiger Beleuchtungsstrahl typischerweise schräg, d.h. nicht koaxial zum Bearbeitungsstrahl in den zu überwachenden Bereich an der Oberseite des Werkstücks eingestrahlt.

Bei einer weiteren Ausführungsform ist die Auswerteeinrichtung ausgebildet, eine minimale Spaltbreite des Schnittspalts in Dickenrichtung des Werkstücks zu ermitteln, sowie die Fokusposition des Bearbeitungsstrahls relativ zum Werkstück anhand der Spaltbreite an der Oberseite des Werkstücks und anhand der minimalen Spaltbreite zu bestimmen. Wie weiter oben dargestellt wurde, können auf diese Weise zwei Stützstellen der Strahlkaustik ermittelt werden, was die Messgenauigkeit bei der Bestimmung der Fokusposition erhöht.

Bei einer weiteren Ausführungsform umfasst die Vorrichtung zusätzlich eine Regeleinrichtung zum Verändern der Fokusposition des Bearbeitungsstrahls relativ zum Werkstück, bis die Fokusposition mit einer Soll-Fokusposition übereinstimmt. Für die Fokus-Regelung kann die Regeleinrichtung auf die mit Hilfe der Auswerteeinrichtung bestimmte (momentane) Fokusposition bzw. Ist-Fokusposition zurückgreifen, um die Fokusposition durch das Einwirken auf ein geeignetes Stellglied an die Soll-Fokusposition zu verschieben.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung eines Ausführungsbeispiels einer Laserbearbeitungsmaschine, die zur Ermittlung einer Spaltbreite eines Schnittspalts ausgebildet ist,
- Fig. 2a,b: Darstellungen der Strahlkaustik eines Laserstrahls bei zwei unterschiedlichen Fokuspositionen des Laserstrahls relativ zu einem plattenförmigen Werkstück,
- Fig. 3: eine schematische Darstellung eines zu überwachenden Bereichs an der Oberseite des Werkstücks mit einer auf die Oberseite des Werkstücks eingestrahlten Linie zur Ermittlung der Spaltbreite an der Oberseite des Werkstücks,
- Fig. 4: eine schematische Darstellung eines zu überwachenden Bereichs an der Oberseite des Werkstücks, an dem sowohl die Spaltbreite des Schnittspalts an der Oberseite des Werkstücks als auch eine minimale Spaltbreite ermittelt werden können,
- Fig. 5: eine Darstellung eines an der in Fig. 1 dargestellten Laserbearbeitungsmaschine aufgenommenen, beleuchteten Bildes der Oberseite des Werkstücks, die der in Fig. 4 gezeigten schematischen Darstellung entspricht, sowie
- Fig. 6: eine Fig. 5 entsprechende Darstellung eines unbeleuchteten Bildes der Oberseite des Werkstücks.

In der folgenden Beschreibung der Zeichnungen werden für gleiche bzw. funktionsgleiche Bauteile identische Bezugszeichen verwendet.

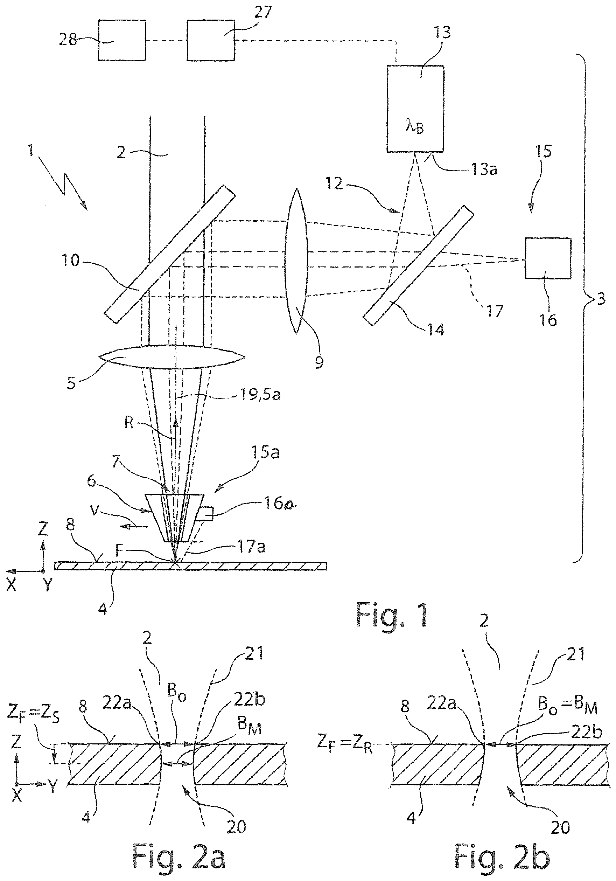

**Fig. 1** zeigt einen beispielhaften Aufbau einer Vorrichtung in Form einer Laserbearbeitungsmaschine 1, die einen Bearbeitungskopf 3 zur Fokussierung eines Laserstrahls 2 auf ein von dem Bearbeitungskopf 3 beabstandetes plattenförmiges Werkstück 4 (Blech) umfasst. Der Laserstrahl 2 wird im gezeigten Beispiel von einem CO₂-Laser erzeugt. Alternativ kann der Laserstrahl 2 beispielsweise durch einen Festkörperlaser erzeugt werden. Der Laserstrahl 2 wird zur Durchführung einer Werkstückbearbeitung an dem Werkstück 4, im gezeigten Beispiel in Form eines Laserschneidprozesses, mittels einer Fokussiereinrichtung in Form einer Fokussierlinse 5 auf das Werkstück 4 fokussiert.

Der Bearbeitungskopf 3 umfasst des Weiteren eine Bearbeitungsdüse 6, wobei die Fokussierlinse 5 im gezeigten Beispiel den Laserstrahl 2 durch die Bearbeitungsdüse 6, genauer gesagt durch eine Öffnung 7 an der Innenseite der Bearbeitungsdüse 6, auf das Werkstück 4 fokussiert, und zwar auf eine an der Oberseite 8 des Werkstücks 4 gebildete Werkstückoberfläche, an welcher der Laserstrahl 2 im gezeigten Beispiel an einer Fokusposition F auftrifft.

In Fig. 1 ebenfalls zu erkennen ist ein teildurchlässiger Spiegel 10, durch den der von einer Strahlführung einfallende Laserstrahl 2 hindurch tritt und auf die Fokussierlinse 5 trifft. An dem teildurchlässigen Spiegel 10 wird Beobachtungsstrahlung (beispielsweise im sichtbaren oder im infraroten Wellenlängenbereich) eines in Fig. 1 gestrichelt dargestellten Beobachtungsstrahlengangs 12 umgelenkt und gelangt über eine weitere Linse 9 sowie einen weiteren teildurchlässigen Spiegel 14 auf eine Bilderfassungseinrichtung 13 in Form einer Kamera. Bei der Bilderfassungseinrichtung 13 kann es sich um eine hochauflösende Kamera handeln, die insbesondere als Hochgeschwindigkeitskamera ausgebildet sein kann. Im dargestellten Beispiel erfolgt die Aufnahme von Bildern durch die Bilderfassungseinrichtung 13 im NIR-Wellenlängenbereich, d.h. bei Wellenlängen im Bereich zwischen ca. 750 nm und ca. 1600 nm, insbesondere bei Wellenlängen zwischen ca. 750 nm und ca. 1100 nm. Auch eine Aufnahme von Bildern im VIS- oder UV-Bereich ist möglich. Bei dem in Fig. 1 gezeigten Beispiel kann ein Filter vor der Bilderfassungseinrichtung 13 angeordnet werden, wenn weitere Strahlungs- bzw. Wellenlängenanteile von der Erfassung mit der Bilderfassungseinrichtung 13 ausgeschlossen werden sollen. Der Filter kann z.B. als schmalbandiger Bandpassfilter ausgebildet sein.

Die weitere Linse 9 dient gemeinsam mit der Fokussierlinse 5 als Abbildungsoptik zur Abbildung der Werkstückoberfläche 8 auf eine Detektorfläche 13a der Kamera 13. Die Abbildungsoptik bzw. die Kamera 13 sind so angeordnet, dass der Beobachtungsstrahlengang 12 koaxial zur in Fig. 1 strichpunktiert dargestellten Strahlachse 19 bzw. deren Verlängerung verläuft. Da die Strahlachse 19 mit der Hauptachse 5a der Fokussierlinse 5 übereinstimmt, erfolgt die Beobachtung der Oberseite 8 des Werkstücks bzw. die Aufnahme des Bildes der Werkstückoberfläche in einer Beobachtungsrichtung R koaxial zur Hauptachse 5a der Fokussierlinse 5 sowie zur Längsachse der typischerweise rotationssymmetrischen Bearbeitungsdüse 6 und ist somit richtungsunabhängig.

Der Bearbeitungskopf 3 umfasst weiterhin eine erste Beleuchtungseinrichtung 15, die der Beleuchtung der von dem Bearbeitungskopf 3 beabstandeten Oberseite 8 des Werkstücks 4 dient. Die erste Beleuchtungseinrichtung 15 weist eine erste Beleuchtungsquelle 16 auf, die einen in Fig. 1 gestrichelt dargestellten ersten Beleuchtungsstrahl 17 erzeugt. Als erste Beleuchtungsquelle 16 kann insbesondere ein Diodenlaser oder ggf. eine LED vorgesehen werden, z.B. bei einer Wellenlänge λ_{B} von 660nm, 808nm, 915nm oder 980nm. Der erste Beleuchtungsstrahl 17 tritt durch den weiteren teildurchlässigen Spiegel 14 sowie die weitere Linse 9 hindurch und wird an dem teildurchlässigen Spiegel 10 in Richtung auf die Fokussierlinse 5 umgelenkt, wobei der erste Beleuchtungsstrahl 17 koaxial zum Laserstrahl 2 bzw. zur Hauptachse 5a der Fokussierlinse 5 ausgerichtet wird, so dass dieser durch die Öffnung 7 der Bearbeitungsdüse 6 tritt und die Oberfläche 8 des Werkstücks 4 flächig beleuchtet.

In Fig. 1 ebenfalls zu erkennen ist eine zweite Beleuchtungseinrichtung 15a, die eine zweite Beleuchtungsquelle 16a aufweist, die wie die weiter oben beschriebene erste Beleuchtungsquelle 16 beispielsweise als Diodenlaser oder ggf. als LED ausgebildet sein kann. Die zweite Beleuchtungseinrichtung 15a ist ausgebildet, einen zweiten, linienförmigen Beleuchtungsstrahl 17a zu erzeugen, der auf die Oberseite 8 des Werkstücks 4 eingestrahlt wird und der eine strukturierte Beleuchtung des Werkstücks 4 bildet.

Bei dem in Fig. 1 gezeigten Beispiel wird der Bearbeitungskopf 3 entlang einer Vorschubrichtung v, die der positiven X-Richtung eines XYZ-Koordinatensystems entspricht, über das Werkstück 4 bewegt. Hinter dem Fokus F des Laserstrahls 2 bildet sich bei der schneidenden Bearbeitung ein Schnittspalt 20 aus, der in Fig. 2a,b in einem Schnitt durch das Werkstück in der YZ-Ebene, d.h. quer zur Vorschubrichtung v, dargestellt ist. In Fig. 2a,b ebenfalls zu erkennen ist der Laserstrahl 2, genauer gesagt dessen Strahlkaustik 21. Die Darstellungen in Fig. 2a und in Fig. 2b unterscheiden sich im Wesentlichen durch die unterschiedliche Fokusposition z_{F} des Laserstrahls 2 in Z-Richtung: Während bei dem in Fig. 2a gezeigten Beispiel die Fokusposition z_{F} in Z-Richtung unterhalb der Oberseite 8 des Werkstücks 4 liegt, befindet sich bei dem in Fig. 2b gezeigten Beispiel die Fokusposition z_{F} in Z-Richtung auf der Höhe der Oberseite 8 des Werkstücks 4.

Bei dem in Fig. 2a gezeigten Beispiel befindet sich die Fokusposition z_{F} in Z-Richtung an einer Position in Z-Richtung unterhalb der Oberseite 8 des Werkstücks 8, an welcher der Schnittspalt 20 eine minimale Spaltbreite B_{M} aufweist. An der Oberseite 8 des Werkstücks 4, genauer gesagt zwischen den Schnittkanten 22a,b an der Oberseite 8 des Werkstücks 4, weist der Schnittspalt 20 hingegen eine größere Schnittspaltbreite B_{O} auf.

Fig. 2b zeigt den Spezialfall, bei dem sich die Fokusposition z_{F} in Z-Richtung genau an der Oberseite 8 des Werkstücks 4 befindet, so dass die minimale Spaltbreite B_{M} des Schnittspalts 20 und die Spaltbreite B_{O} an der Oberseite 8 des Werkstücks 4 praktisch gleich groß sind. Die in Fig. 2b gezeigte Fokusposition z_{F} kann daher als Referenzposition z_{R} verwendet werden, von der ausgehend eine gewünschte Fokusposition z_{F} in Z-Richtung relativ zum Werkstück 4 eingestellt werden kann.

Ist die Strahlkaustik 21 des Laserstrahls 2 bekannt, beispielsweise weil diese vor dem schneidenden Bearbeiten des Werkstücks 4 vermessen wurde, kann anhand der Spaltbreite B_{O} an der Oberseite 8 des Werkstücks 4 die Fokusposition z_{F} in Z-Richtung bestimmt werden, wenn bekannt ist, ob die Fokusposition z_{F} sich oberhalb oder unterhalb der Oberseite 8 des Werkstücks 4 befindet, was in der Regel bei einem schneidenden Bearbeitungsprozess der Fall ist.

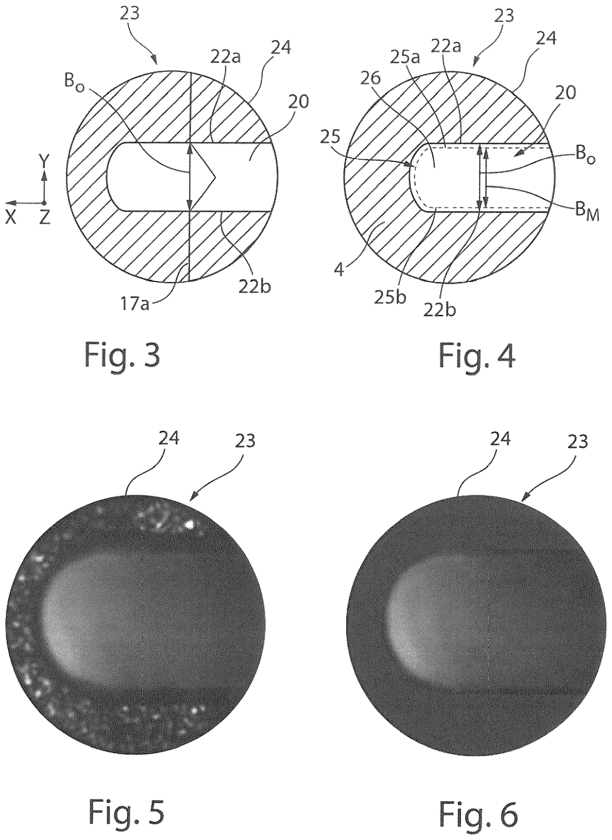

Bei dem in Fig. 3 gezeigten Beispiel ist ein mit Hilfe der Kamera 13 aufgenommenes Bild 23 eines zu überwachenden, kreisrunden Bereichs 24 an der Oberseite 8 des Werkstücks 4 dargestellt, das durch die Düsenöffnung 7 der Bearbeitungsdüse 6 hindurch aufgenommen wurde. In dem aufgenommenen Bild 23 ist der Schnittspalt 20 mit den beiden Schnittkanten 22a,b zu erkennen. In dem Bild 23 ebenfalls zu erkennen ist der linienförmige Beleuchtungsstrahl 17a, der von der zweiten Beleuchtungseinrichtung 16a auf die Oberseite 8 des Werkstücks 4 in Y-Richtung, d.h. quer zur Richtung des Schnittspalts 20 bzw. zur Vorschubrichtung v eingestrahlt wird. Der linienförmige Beleuchtungsstrahl 17a knickt an den beiden Schnittkanten 22a,b des Schnittspalts 20 ab, so dass anhand des in Fig. 3 dargestellten Bildes 23 die Spaltbreite B_{O} an der Oberseite 8 des Werkstücks 4 ermittelt werden kann. Die Verwendung eines linienförmigen Beleuchtungsstrahls 17a zur strukturierten Beleuchtung der Oberseite 8 des Werkstücks 4 ist insbesondere günstig, wenn die Schnittkanten 22a,b in dem Bild 23 nicht gut zu identifizieren sind, beispielsweise weil diese in Graustufen dargestellt werden. Das in Fig. 3 gezeigte Bild 23 der Oberseite 8 des Werkstücks 4 kann bei Wellenlängen im sichtbaren Wellenlängenbereich aufgenommen werden, dies ist aber nicht zwingend der Fall.

Das in Fig. 4 schematisch dargestellte sowie in Fig. 5 tatsächlich aufgenommene Bild 23 des zu überwachenden Bereichs 24 an der Oberseite 8 des Werkstücks 4 wurde hingegen mit Hilfe der Kamera 13 bei Wellenlängen λ_{B} im infraroten Wellenlängenbereich aufgenommen, und zwar bei einer flächigen Beleuchtung des Schnittspalts 20 mit Hilfe des ersten Beleuchtungsstrahls 17. In dem mit Hilfe der Kamera 13 aufgenommenen Bild 23 sind ebenfalls die Schnittkanten 22a,b des Schnittspalts 20 zu erkennen. In Fig. 5 ist ebenfalls ein schwarzer Rand 25 erkennbar, dessen Kontur in Fig. 4 gestrichelt dargestellt ist und der zwei seitliche Kanten 25a,b aufweist, die parallel zu den Schnittkanten 22a,b verlaufen. Der Rand 25 bzw. dessen in Fig. 4 gestrichelt dargestellte Konturlinie bildet die geometrische Begrenzung von Prozessemissionen 26, die beim schneidenden Bearbeiten des Werkstücks 4 entstehen und die in Fig. 5 hell dargestellt sind. Der Abstand zwischen den beiden seitlichen Kanten 25a,b des Randes 25 der Prozessemissionen 26 entspricht der minimalen Schnittspaltbreite B_{M}, da die Prozessemissionen 26, bei denen es sich beispielsweise um Temperaturstrahlung und/oder um Linienstrahlung handeln kann, die von der Schnittfront, dem Schmelzfaden oder von Metalldampf innerhalb und unterhalb des Schnittspalts 20 verursacht wird, durch den Schnittspalt 20 begrenzt werden. Anhand des in Fig. 4 bzw. in Fig. 5 dargestellten Bildes 23 kann daher sowohl die Spaltbreite B_{O} an der Oberseite 8 des Werkstücks 4 als auch die minimale Spaltbreite B_{M} an ein- und demselben Bild 23 ermittelt werden. Wie in Fig. 2a zu erkennen ist, entspricht die minimale Spaltbreite B_{M} dem Durchmesser der Strahltaille des Laserstrahls 2, d.h. die minimale Spaltbreite B_{M} liefert eine weitere Stützstelle der Strahlkaustik 21 des Laserstrahls 2, wodurch die Messgenauigkeit bei der Bestimmung der Fokusposition z_{F} des Laserstrahls 2 in Z-Richtung verbessert werden kann. Gegebenenfalls kann durch diese zusätzliche Information auch ein weiterer Parameter der Strahlkaustik 21 bestimmt werden kann.

Alternativ zu der in Fig. 4 bzw. in Fig. 5 gezeigten gleichzeitigen Messung der Spaltbreite B_{O} an der Oberseite 8 des Werkstücks 4 sowie der minimalen Spaltbreite B_{M} anhand des in Fig. 5 gut zu erkennenden schwarzen Randes 25 können die beiden Spaltbreiten B_{O}, B_{M} auch in zwei oder mehr unterschiedlichen Bildern 23 ermittelt werden. Beispielweise kann die Spaltbreite B_{O} an der Oberseite 8 des Werkstücks 4 anhand des in Fig. 3 gezeigten Bildes 23 mit Hilfe des linienförmigen Beleuchtungsstrahls 17a ermittelt werden, während die minimale Spaltbreite B_{M} anhand des in Fig. 4 bzw. in Fig. 5 dargestellten Bildes 23 ermittelt wird.

Gegebenenfalls kann zusätzlich zu dem in Fig. 3 gezeigten Bild 23, bei dem die Oberseite 8 des Werkstücks 4 mit dem ersten Beleuchtungsstrahl 17 flächig beleuchtet wird, ein weiteres Bild 23 ohne einen Beleuchtungsstrahl 17 aufgenommen werden, wie dies in Fig. 6 gezeigt ist. Auf diese Weise können die beiden Spaltbreiten B_{M}, B_{O} anhand von wechselseitig beleuchteten und unbeleuchteten Bildern 23 ermittelt. In diesem Fall kann das in Fig. 6 gezeigte, nicht beleuchtete Bild von einem beispielsweise flächig beleuchteten Bild 23 wie es in Fig. 5 gezeigt ist, pixelweise subtrahiert werden, sodass der Schnittspalt 20 in dem resultierenden Bild vollständig dunkel erscheint, da die Prozessemissionen aus dem beleuchteten Bild 23 entfernt werden. In dem resultierenden Bild 23, welches dem in Fig. 3 gezeigten Bild 23 ohne den linienförmigen Beleuchtungsstrahl 17a entspricht, können einfache Algorithmen zur Kantenfindung angewendet werden.

Es ist insbesondere auch möglich, die beiden Spaltbreiten B_{M}, B_{O} anhand von drei wechselseitig beleuchteten und unbeleuchteten Bildern 23 zu ermitteln. Beispielsweise können in diesem Fall ein erstes und drittes unbeleuchtetes Bild 23 (entsprechend Fig. 6) sowie ein zweites, beleuchtetes Bild 23 (entsprechend Fig. 5) verwendet werden. In diesem Fall ist es günstig, wenn die "unbeleuchteten" ersten und dritten Bilder 23 von dem "beleuchteten" zweiten Bild 23 pixelweise subtrahiert werden. Zu diesem Zweck kann beispielsweise der Mittelwert der "unbeleuchteten" Bilder 23 von dem "beleuchteten" Bild 23 pixelweise subtrahiert werden oder die beiden "unbeleuchteten" Bilder werden vom Doppelten des "beleuchteten" Bildes 23 pixelweise subtrahiert.

Die Auswertung des bzw. der Bilder 23 zur Bestimmung der Fokusposition z_{F} in Z-Richtung erfolgt in einer in Fig. 1 dargestellten Auswerteeinrichtung 27 der Laserbearbeitungsmaschine 1. Die Auswerteeinrichtung 27 steht mit einer Regeleinrichtung 28 in signaltechnischer Verbindung, welche die Fokusposition z_{F} durch das Einwirken auf ein geeignetes Stellglied, welches beispielsweise eine Veränderung des Abstandes zwischen dem Bearbeitungskopf 3 und dem Werkstück 4 bewirkt, an eine Soll-Position z_{S} (vgl. Fig. 2a) verschiebt, die sich in einem vorgegebenen Abstand von der Referenz-Fokusposition z_{R} an der Oberseite 8 des Werkstücks 4 befindet.

## Patentansprüche

1. Verfahren zum Bestimmen einer Fokusposition (z_{F}) eines Bearbeitungsstrahls (2), insbesondere eines Laserstrahls, relativ zu einem Werkstück (4) während des schneidenden Bearbeitens des Werkstücks (4) mit dem Bearbeitungsstrahl (2), umfassend:
Aufnehmen mindestens eines ortsaufgelösten Bildes (23) eines zu überwachenden Bereichs (24) des Werkstücks (4), der die Schnittkanten (22a,b) eines während des schneidenden Bearbeitens gebildeten Schnittspalts (20) an der Oberseite (8) des Werkstücks (4) umfasst,
Ermitteln einer Spaltbreite (Bo) des Schnittspalts (20) an der Oberseite (8) des Werkstücks (4) anhand der Schnittkanten (22a,b) in dem mindestens einen ortsaufgelösten Bild (23), sowie
Bestimmen der Fokusposition (z_{F}) des Bearbeitungsstrahls (2) relativ zum Werkstück (4) anhand der ermittelten Spaltbreite (Bo) und anhand einer Strahlkaustik (21) des Bearbeitungsstrahls (2).

2. Verfahren nach Anspruch 1, weiter umfassend:
Flächiges und/oder strukturiertes Beleuchten der Oberseite (8) des Werkstücks (4) durch Einstrahlen mindestens eines Beleuchtungsstrahls (17, 17a) zumindest in den zu überwachenden Bereich (24).

3. Verfahren nach Anspruch 2, bei dem der Beleuchtungsstrahl (17) koaxial zum Bearbeitungsstrahl (2) auf die Oberseite (8) des Werkstücks (4) eingestrahlt wird.

4. Verfahren nach Anspruch 2 oder 3, bei dem das strukturierte Beleuchten das Einstrahlen eines linienförmigen Beleuchtungsstrahls (17a) auf die Oberseite (8) des Werkstücks (4) umfasst.

5. Verfahren nach einem der vorhergehenden Ansprüche, weiter umfassend:
Ermitteln einer minimalen Spaltbreite (B_{M}) des Schnittspalts (20) in Dickenrichtung (Z) des Werkstücks (4), sowie
Bestimmen der Fokusposition (z_{F}) des Bearbeitungsstrahls (2) relativ zum Werkstück (4) anhand der Spaltbreite (Bo) an der Oberseite (8) des Werkstücks (4) und anhand der minimalen Spaltbreite (B_{M}).

6. Verfahren nach Anspruch 5, bei dem die minimale Spaltbreite (B_{M}) des Schnittspalts (20) anhand von Prozessemissionen (26) beim schneidenden Bearbeiten bestimmt wird.

7. Verfahren nach einem der Ansprüche 5 oder 6, bei dem das Ermitteln der Spaltbreite (Bo) an der Oberseite (8) des Werkstücks (4) und das Ermitteln der minimalen Spaltbreite (B_{M}) an ein- und demselben aufgenommenen Bild (23) erfolgen.

8. Verfahren nach einem der Ansprüche 5 bis 7, bei dem das Ermitteln der Spaltbreite (Bo) an der Oberseite (8) des Werkstücks (4) und das Ermitteln der minimalen Spaltbreite (B_{M}) an mindestens zwei Bildern (23) erfolgen, wobei beim Aufnehmen des zweiten Bildes (23) mindestens ein Beleuchtungsstrahl (17, 17a) auf die Oberseite (8) des Werkstücks (4) eingestrahlt wird, wobei beim Aufnehmen des ersten Bildes (23) kein Beleuchtungsstrahl auf die Oberseite (8) des Werkstücks (4) eingestrahlt wird, und wobei bevorzugt das erste Bild (23) vom zweiten Bild (23) pixelweise subtrahiert wird.

9. Verfahren nach Anspruch 8, bei dem das Ermitteln der Spaltbreite (Bo) an der Oberseite (8) des Werkstücks (4) und das Ermitteln der minimalen Spaltbreite (B_{M}) an mindestens drei Bildern (23) erfolgen, wobei beim Aufnehmen des dritten Bildes (23) kein Beleuchtungsstrahl auf die Oberseite (8) des Werkstücks (4) eingestrahlt wird.

10. Verfahren nach einem der vorhergehenden Ansprüche, bei dem mindestens ein Bild (23) des zu überwachenden Bereichs (24) bei Wellenlängen (λ_{B}) im infraroten Wellenlängenbereich aufgenommen wird.

11. Verfahren nach einem der vorhergehenden Ansprüche, bei dem das mindestens eine Bild (23) des zu überwachenden Bereichs (24) koaxial zu einer Strahlachse (19) des Bearbeitungsstrahls (2) aufgenommen wird.

12. Verfahren zum Regeln einer Fokusposition (z_{F}) eines Bearbeitungsstrahls (2) relativ zu einem Werkstück (4) beim schneidenden Bearbeiten des Werkstücks (4) mit dem Bearbeitungsstrahl (2), umfassend:
Durchführen des Verfahrens nach einem der vorhergehenden Ansprüche zum Bestimmen einer Fokusposition (z_{F}) des Bearbeitungsstrahls (2) relativ zum Werkstück (4), sowie
Verändern der Fokusposition (z_{F}) des Bearbeitungsstrahls (2) relativ zum Werkstück (4) bis die Fokusposition (z_{F}) mit einer Soll-Fokusposition (zs) übereinstimmt.

13. Vorrichtung (1) zum schneidenden Bearbeiten eines Werkstücks (4) mittels eines Bearbeitungsstrahls (2), insbesondere mittels eines Laserstrahls, umfassend:
eine Bilderfassungseinrichtung (13) zur Erfassung mindestens eines ortsaufgelösten Bildes (23) eines zu überwachenden Bereichs (24) an der Oberseite (8) des Werkstücks (4), der die Schnittkanten (22a,b) eines während des schneidenden Bearbeitens gebildeten Schnittspalts (20) an der Oberseite (8) des Werkstücks (4) umfasst,
sowie
eine Auswerteeinrichtung (27), welche ausgebildet ist, anhand der Schnittkanten (22a,b) in dem mindestens einen Bild (23) eine Spaltbreite (Bo) des Schnittspalts (20) an der Oberseite (8) des Werkstücks (4) zu ermitteln, sowie anhand der ermittelten Spaltbreite (Bo) und anhand einer Strahlkaustik (21) des Bearbeitungsstrahls (2) eine Fokusposition (z_{F}) des Bearbeitungsstrahls (2) relativ zum Werkstück (4) zu bestimmen.

14. Vorrichtung nach Anspruch 12, weiter umfassend: mindestens eine Beleuchtungseinrichtung (15, 15a) zur flächigen und/oder strukturierten Beleuchtung der Oberseite (8) des Werkstücks (4) durch das Einstrahlen eines Beleuchtungsstrahls (17, 17a) zumindest in den zu überwachenden Bereich (24).

15. Vorrichtung nach Anspruch 12 oder 13, bei der die Auswerteeinrichtung (27) ausgebildet ist, eine minimale Spaltbreite (B_{M}) des Schnittspalts (20) in Dickenrichtung (Z) des Werkstücks (4) zu ermitteln, sowie die Fokusposition (z_{F}) des Bearbeitungsstrahls (2) relativ zum Werkstück (4) anhand der Spaltbreite (Bo) an der Oberseite (8) des Werkstücks (4) und anhand der minimalen Spaltbreite (B_{M}) zu bestimmen.

16. Vorrichtung nach einem der Ansprüche 12 bis 14, weiter umfassend:
eine Regeleinrichtung (28) zum Verändern der Fokusposition (z_{F}) des Bearbeitungsstrahls (2) relativ zum Werkstück (4), bis die Fokusposition (z_{F}) mit einer Soll-Fokusposition (zs) übereinstimmt.

## Claims

1. A method for determining a focal position (z_{F}) of a machining beam (2), in particular a laser beam, relative to a workpiece (4) during the machining of the workpiece (4) with the machining beam (2), comprising:
recording at least one spatially resolved image (23) of a region (24) to be monitored of the workpiece (4), which includes the cut edges (22a,b) of a cut gap (20) formed during the machining on the upper side (8) of the workpiece (4),
ascertaining a gap width (Bo) of the cut gap (20) on the upper side (8) of the workpiece (4) based on the cut edges (22a,b) in the at least one spatially resolved image (23), and
determining the focal position (z_{F}) of the machining beam (2) relative to the workpiece (4) based on the determined gap width (Bo) and based on a beam caustic (21) of the machining beam (2).

2. The method according to claim 1, further comprising:
areal and/or structured illumination of the upper side (8) of the workpiece (4) by irradiating at least one illumination beam (17, 17a) at least in the region (24) to be monitored.

3. The method according to claim 2, in which the illumination beam (17) is irradiated onto the upper side (8) of the workpiece (4) coaxially with the machining beam (2).

4. The method according to claim 2 or 3, in which the structured illumination comprises the irradiation of a linear illumination beam (17a) onto the upper side (8) of the workpiece (4).

5. The method according to one of the previous claims, further comprising:
ascertaining a minimum gap width (B_{M}) of the cut gap (20) in the thickness direction (Z) of the workpiece (4), and
determining the focal position (z_{F}) of the machining beam (2) relative to the workpiece (4) based on the gap width (Bo) on the upper side (8) of the workpiece (4) and based on the minimum gap width (B_{M}).

6. The method according to claim 5, in which the minimum gap width (B_{M}) of the cut gap (20) is determined on the basis of process emissions (26) during machining.

7. The method according to one of claims 5 or 6, in which the gap width (Bo) on the upper side (8) of the workpiece (4) and the minimum gap width (B_{M}) are ascertained on one and the same recorded image (23).

8. The method according to one of claims 5 to 7, in which the gap width (Bo) on the upper side (8) of the workpiece (4) and the minimum gap width (B_{M}) are ascertained on at least two images (23), wherein, during recording of the second image (23), at least one illumination beam (17, 17a) is irradiated onto the upper side (8) of the workpiece (4), wherein no illumination beam is irradiated onto the upper side (8) of the workpiece (4) during recording of the first image (23), and wherein the first image (23) is preferably subtracted pixel by pixel from the second image (23).

9. The method according to claim 8, in which the gap width (Bo) on the upper side (8) of the workpiece (4) and the minimum gap width (B_{M}) are ascertained on at least three images (23), wherein, during recording of the third image (23), no illumination beam is irradiated onto the upper side (8) of the workpiece (4).

10. The method according to one of the preceding claims, in which at least one image (23) of the region (24) to be monitored is recorded at wavelengths (λ_{B}) in the infrared wavelength range.

11. The method according to one of the preceding claims, in which the at least one image (23) of the region (24) to be monitored is recorded coaxially to a beam axis (19) of the machining beam (2).

12. A method for controlling a focal position (z_{F}) of a machining beam (2) relative to a workpiece (4) during machining of the workpiece (4) with the machining beam (2), comprising:
carrying out the method according to one of the preceding claims for determining a focal position (z_{F}) of the machining beam (2) relative to the workpiece (4), and
changing the focal position (z_{F}) of the machining beam (2) relative to the workpiece (4) until the focal position (z_{F}) coincides with a target focal position (zs).

13. A device (1) for machining a workpiece (4) by means of a machining beam (2), in particular by means of a laser beam, comprising:
an image capture device (13) for capturing at least one spatially resolved image (23) of a region (24) to be monitored on the upper side (8) of the workpiece (4), which region includes the cut edges (22a, b) of a cut gap (20) on the upper side (8) of the workpiece (4), and
an evaluation device (27) which is designed to ascertain a gap width (Bo) of the cut gap (20) on the upper side (8) of the workpiece (4) on the basis of the cut edges (22a,b) in the at least one image (23), as well as based on the ascertained gap width (B_{O}) and based on a beam caustic (21) of the machining beam (2) to determine a focal position (z_{F}) of the machining beam (2) relative to the workpiece (4).

14. The device according to claim 12, further comprising: at least one illumination device (15, 15a) for areal and/or structured illumination of the upper side (8) of the workpiece (4) by irradiating an illuminating beam (17, 17a) at least into the region (24) to be monitored .

15. The device according to claim 12 or 13, in which the evaluation device (27) is designed to ascertain a minimum gap width (B_{M}) of the cut gap (20) in the thickness direction (Z) of the workpiece (4), and
to determine the focal position (z_{F}) of the machining beam (2) relative to the workpiece (4) based on the gap width (Bo) on the upper side (8) of the workpiece (4) and based on the minimum gap width (B_{M}).

16. The device according to one of claims 12 to 14, further comprising: a control device (28) for changing the focal position (z_{F}) of the machining beam (2) relative to the workpiece (4) until the focal position (z_{F}) coincides with a target focal position (zs).

## Revendications

1. Procédé pour la détermination d'une position focale (z_{F}) d'un faisceau d'usinage (2), en particulier d'un faisceau laser, par rapport à une pièce (4), au cours de la découpe de la pièce (4) par le faisceau d'usinage (2), comprenant :
l'enregistrement d'au moins une image (23) de résolution spatiale suffisante d'une zone à surveiller (24) de la pièce (4), qui comprend les arêtes de coupe (22a,b) d'une fente de coupe (20) formée pendant la coupe sur la face supérieure (8) de la pièce (4),
le calcul d'une largeur de fente (Bo) de la fente de coupe (20) sur la face supérieure (8) de la pièce (4) sur la base des arêtes de coupe (22a, b) dans l'au moins une image (23) de résolution spatiale suffisante , et
la détermination de la position focale (z_{F}) du faisceau d'usinage (2) par rapport à la pièce (4) sur la base de la largeur de fente (Bo) calculée et sur la base d'une caustique de faisceau (21) du faisceau d'usinage (2).

2. Procédé selon la revendication 1, comprenant en outre :
l'éclairage surfacique et/ou structuré de la face supérieure (8) de la pièce (4) en projetant au moins un faisceau d'éclairage (17, 17a) au moins dans la zone à surveiller (24).

3. Procédé selon la revendication 2, dans lequel le faisceau d'éclairage (17) est projeté sur la face supérieure (8) de la pièce (4) dans une direction coaxiale au faisceau d'usinage (2).

4. Procédé selon la revendication 2 ou 3, dans lequel l'éclairage structuré comprend la projection d'un faisceau d'éclairage linéaire (17a) sur la face supérieure (8) de la pièce (4).

5. Procédé selon l'une quelconque des revendications précédentes, comprenant en outre :
le calcul d'une largeur de fente minimale (B_{M}) de la fente de coupe (20) dans la direction de l'épaisseur (Z) de la pièce (4), et
la détermination de la position focale (z_{F}) du faisceau d'usinage (2) par rapport à la pièce (4) sur la base de la largeur de fente (Bo) sur la face supérieure (8) de la pièce (4) et sur la base de la largeur de fente minimale (B_{M}).

6. Procédé selon la revendication 5, dans lequel la largeur de fente minimale (B_{M}) de la fente de coupe (20) est déterminée sur la base des émissions du processus (26) de coupe.

7. Procédé selon l'une des revendications 5 ou 6, dans lequel le calcul de la largeur de fente (Bo) sur la face supérieure (8) de la pièce (4) et le calcul de la largeur de fente minimale (B_{M}) s'effectuent sur une seule et même image (23) capturée.

8. Procédé selon l'une des revendications 5 à 7, dans lequel le calcul de la largeur de fente (Bo) sur la face supérieure (8) de la pièce (4) et le calcul de la largeur de fente minimale (B_{M}) s'effectuent sur au moins deux images (23), au moins un faisceau d'éclairage (17, 17a) étant projeté sur la face supérieure (8) de la pièce (4) lorsque la deuxième image (23) est capturée, aucun faisceau d'éclairage n'étant projeté sur la face supérieure (8) de la pièce (4) lorsque la première image (23) est capturée, la première image (23) étant de préférence soustraite pixel par pixel de la deuxième image (23).

9. Procédé selon la revendication 8, au cours duquel le calcul de la largeur de fente (Bo) sur la face supérieure (8) de la pièce (4) et le calcul de la largeur de fente minimale (B_{M}) sont effectués sur au moins trois images (23), aucun faisceau d'éclairage n'étant projeté sur la face supérieure (8) de la pièce (4) lorsque la troisième image (23) est capturée.

10. Procédé selon l'une des revendications précédentes, dans lequel au moins une image (23) de la zone à surveiller (24) est capturée à des longueurs d'onde (λ_{B}) dans le domaine des longueurs d'onde infrarouges.

11. Procédé selon l'une des revendications précédentes, dans lequel l'au moins une image (23) de la zone à surveiller (24) est capturée dans une direction coaxiale à un axe de faisceau (19) du faisceau d'usinage (2).

12. Procédé de réglage d'une position focale (z_{F}) d'un faisceau d'usinage (2) par rapport à une pièce (4) au cours de la découpe de la pièce (4) par le faisceau d'usinage (2), comprenant :
l'exécution du procédé selon l'une des revendications précédentes pour déterminer une position focale (z_{F}) du faisceau d'usinage (2) par rapport à la pièce (4), et
la modification de la position focale (z_{F}) du faisceau d'usinage (2) par rapport à la pièce (4) jusqu'à ce que la position focale (z_{F}) corresponde à une position focale cible (zs).

13. Dispositif (1) d'usinage d'une pièce (4) au moyen d'un faisceau d'usinage (2), notamment au moyen d'un faisceau laser, comprenant :
un dispositif de capture d'image (13) pour capturer au moins une image (23) de résolution spatiale suffisante d'une zone à surveiller (24) sur la face supérieure (8) de la pièce (4), qui comprend les arêtes de coupe (22a, b) d'une fente de coupe (20) formée pendant la coupe sur la face supérieure (8) de la pièce (4),
et
un dispositif d'évaluation (27) conçu pour calculer une largeur de fente (Bo) de la fente de coupe (20) sur la face supérieure (8) de la pièce (4) sur la base des arêtes de coupe (22a,b) dans l'au moins une image (23), ainsi que sur la base de la largeur de fente (Bo) calculée et sur la base d'une caustique de faisceau (21) du faisceau d'usinage (2) pour déterminer une position focale (z_{F}) du faisceau d'usinage (2) par rapport à la pièce (4).

14. Dispositif selon la revendication 12, comprenant en outre : au moins un dispositif d'éclairage (15, 15a) pour un éclairage de surface et/ou structuré de la face supérieure (8) de la pièce (4) en projetant un faisceau d'éclairage (17, 17a) au moins dans la zone à surveiller (24).

15. Dispositif selon la revendication 12 ou 13, dans lequel le dispositif d'évaluation (27) est conçu pour calculer une largeur de fente minimale (B_{M}) de la fente de coupe (20) dans le sens de l'épaisseur (Z) de la pièce (4), et
pour déterminer la position focale (z_{F}) du faisceau d'usinage (2) par rapport à la pièce (4) sur la base de la largeur de fente (Bo) sur la face supérieure (8) de la pièce (4) et sur la base de la largeur de fente minimale (B_{M}).

16. Dispositif selon l'une des revendications 12 à 14, comprenant en outre : un dispositif de commande (28) pour modifier la position focale (z_{F}) du faisceau d'usinage (2) par rapport à la pièce (4) jusqu'à ce que la position focale (z_{F}) coïncide avec une position focale cible (zs).
